# EUROPÄISCHE PATENTSCHRIFT

(11) **EP 3 162 934 B1**
(45) Veröffentlichungstag und Bekanntmachung des Hinweises auf die Patenterteilung: **28.03.2018**
(21) Anmeldenummer: 15191962.8
(22) Anmeldetag: 28.10.2015
(51) Int. Cl.: D03C 7/04

(54) **VORRICHTUNG ZUM BILDEN EINER DREHERKANTE, INSBESONDERE FÜR EINE WEBMASCHINE SOWIE PROJEKTILWEBMASCHINE MIT EINER SOLCHEN VORRICHTUNG**
DEVICE FOR FORMING A LENO SELVEDGE, IN PARTICULAR FOR A LOOM, AND PROJECTILE WEAVING LOOM EQUIPPED WITH SAID DEVICE
DISPOSITIF DE FORMATION D'UNE LISIERE A PAS DE GAZE, EN PARTICULIER POUR UN METIER A TISSER ET METIER A TISSER A PROJECTILES DOTE D'UN TEL DISPOSITIF

(43) Veröffentlichungstag der Anmeldung: 03.05.2017
(73) Patentinhaber: Gebrüder Klöcker GmbH, 46325 Borken-Weseke (DE)
(72) Erfinder: HOCKEMEYER, Kurt, 46325 Borken-Weseke (DE); SCHWEMMLEIN, Christoph, Dr., 46325 Borken-Weseke (DE)
(74) Vertreter: Patentanwälte Walther Hinz Bayer PartGmbB

(56) Entgegenhaltungen:
- DE-A1- 10 313 188
- DE-C2- 19 733 261
- US-A- 3 700 942

## Beschreibung

Die Erfindung betrifft einerseits eine Vorrichtung zum Bilden einer Dreherkante, insbesondere für eine Webmaschine und andererseits eine Projektilwebmaschine mit einer solchen Vorrichtung.

Aus dem Stand der Technik sind Vorrichtungen zum Bilden einer Dreherkante, insbesondere für schützenlose Webmaschinen, umfassend einen Elektromotor mit einem Rotor bekannt, wobei der Rotor beabstandet zueinander mindestens zwei Führungselemente für die Dreherfäden zum Bilden der Dreherkante mit den entsprechenden Schussfäden aufweist. So ist aus der DE PS 4405776 eine Vorrichtung bekannt, bei der ein elektrisch ansteuerbarer Stellmotor vorgesehen ist, der eine Dreherscheibe antreibt, wobei die Dreherscheibe den Läufer oder Rotor des elektrisch ansteuerbaren Stellmotors bildet. Der Startor selbst ist durch ein Trägerteil an der Webmaschine anbringbar und zwar vorzugsweise in einem zwischen den Längsstreben und Litzen liegenden Freiraum vor den ersten Webschäften der Webmaschine. Im Einzelnen ist hierbei vorgesehen, dass die Dreherscheibe, die den Läufer des elektrisch ansteuerbaren Stellmotors bildet, als Führungselemente zwei einander gegenüberliegend angeordnete Öffnungen für die Dreherfäden aufweist. Dieser bekannte Rotationskantendreher einer Webmaschine arbeitet nun derart, dass er wenige Dutzend Umdrehungen in eine Richtung durchführt und hierbei nach jeweils einer Umdrehung einen Schussfaden abbindet. Es entsteht hier somit eine Volldreherkante. Auf der Seite der Zuführung der beiden Dreherfäden verdrillen sich diese Dreherfäden entsprechend der Anzahl der Umdrehungen der Dreherscheibe, sodass, um diese Verdrillung aufzuheben, eine Drehrichtungsumkehr angezeigt ist, mithin also die Dreherscheibe in genau die entgegengesetzte Richtung rotieren muss. Die Anzahl der Umdrehungen in jede Richtung muss hierbei im zeitlichen Mittel gleich sein. Würde keine Drehrichtungsumkehr vorgenommen werden, so würden die Dreherfäden aufgrund der ansteigenden Spannung wegen der zunehmendem Verdrillung irgendwann reißen.

Ein ähnlicher Rotationskantendreher mit elektromagnetischem Antrieb ist aus der DE 197 33 261 C2 bekannt, wobei dieser Motor nach Art eines Servomotors arbeitet. Insofern ist eine Messung des Drehwinkels zum Zwecke der Erfassung einer definierten Winkellage der Dreherscheibe vorgesehen, um die Rotation der Dreherscheibe mit der Fachöffnung der Webmaschine abzustimmen. Das heißt, dass die Dreherscheibe eine kontinuierliche auf die Geschwindigkeit in Bezug auf die Hubbewegung der Webschäfte zur Fachöffnung bzw. dem Fachschluss der Webmaschine abgestimmte Bewegung durchführt.

Aus der EP 839 219 B1 ist nun ein sogenannter Propellerdreher bekannt. Ein solcher Propellerdreher zeichnet sich durch zwei am Läufer eines Elektromotors diagonal gegenüberliegend angeordnete Arme und somit durch eine geringe bewegte Masse aus, weshalb, wie dies in der EP 1 019 571 B1 beschrieben ist, ein solcher Propellerdreher unabhängig von der Bewegung der Webschäfte ansteuerbar ist. Das heißt, die Beschleunigung des Propellerdrehers ist derart, dass zum Zeitpunkt der Öffnung des Dreherfachs durch die Schäfte der Webmaschine, die Arme des Propellerdrehers mit den endseitig angeordneten Ösen, durch die die Dreherfäden laufen, das Fach bereits aufgespannt haben. Somit wird der Propellerdreher schaftunabhängig angesteuert. Das heißt, mit dem bekannten Propellerdreher wird sichergestellt, dass sich zu Beginn des Schusseintrages durch die Dreherkantenvorrichtung auch die beiden Dreherfäden in Fachöffnung befinden und nach Abschluss des Schusseintrages die Dreherfäden unmittelbar in die Geschlossenfachstellung überführt werden. Somit kommt es ausschließlich darauf an, dass die jeweilige Endstellung, das heißt, Fach-Offen bzw. Fach-Geschlossen, durch die Vorrichtung spätestens dann erreicht wird, wenn die Webschäfte eine entsprechende Stellung einnehmen. Das heißt, dass ein für jeden Zeitpunkt synchroner Bewegungsablauf zwischen der Bewegung des Rotors des Elektromotors mit der Bewegung der Webschäfte nicht erforderlich ist.

Bekannt ist außerdem bei Webmaschinen mit langen Kettbäumen im Gewebe eine sogenannte Schnittgasse vorzusehen. Hierbei wird das Gewebe geteilt, wobei im Bereich der Schnittgasse, um ein Aufriffeln des Gewebes zu verhindern, zwei Dreherkantenvorrichtungen vorgesehen sind, um zu jeder Seite eine Dreherkante zu erstellen. Die Anordnung eines oder mehrerer Propellerdreher in der Schnittgasse hat jedoch den Nachteil, dass, weil dieser relativ breit baut, die Schnittgasse entsprechend breit ist, was bedeutet, dass "Gewebe verloren geht".

Die der Erfindung zugrunde liegende Aufgabe besteht demzufolge darin, hier Abhilfe zu schaffen. Insbesondere soll eine Vorrichtung der eingangs genannten Art bereitgestellt werden, die relativ schmal baut, über ein hohes Drehmoment verfügt, und demzufolge in der Lage ist hohe Beschleunigungswerte bereitzustellen, sodass sie ähnlich wie bei dem zuvor beschriebenen Propellerdreher in der Lage ist, die Stellung Fach-Offen bzw. Fach-Geschlossen unabhängig von der Bewegung der Webschäfte bereitzustellen.

Die Aufgabe wird erfindungsgemäß mit einer Vorrichtung zum Bilden einer Dreherkante, insbesondere für eine Webmaschine gemäß dem Anspruch 1 gelöst. Hierbei umfasst die Vorrichtung ein feststehendes Gehäuse mit einem in dem Gehäuse durch ein Lager drehbar gelagerten kreisring- oder kreisscheibenförmigen Träger, wobei der Träger auf dem Außenumfang mindestens zwei parallel zueinander verlaufende Zahnkränze aus magnetisierbarem Material aufweist. Das heißt, dass jeder Zahnkranz aus magnetisierbarem Material auf dem Außenumfang eine durchgehende Verzahnung besitzt. Im Bereich des Innenrings des Lagers weist der Träger zwei diagonal einander gegenüberliegende Führungsösen für die Führung der zwei Dreherfäden auf. Im Bereich der Zahnkränze sind eine Mehrzahl von Magneten umfangsverteilt auf dem Außenumfang oder Außenmantel des Trägers angeordnet, wobei das Gehäuse den beiden Zahnkränzen zugeordnet ein kreisringförmiges Statorblechpaket mit einer Mehrzahl von darin angeordneten Spulen aufweist, wobei das Statorblechpaket im Bereich der Spulen Segmente mit jeweils einer der Verzahnung der Zahnkränze zugeordneten Verzahnung aufweist. Die Segmente entsprechen hierbei in ihrer räumlichen Erstreckung in etwa der Größe der Spulen. Der Rotor oder Läufer des elektromagnetischen Antriebs wird hierbei durch den Träger mit den Zahnkränzen und den mit den Zahnkränzen in Verbindung stehenden Magneten gebildet.

Insbesondere aufgrund der Zahnkränze mit der auf dem Umfang der Zahnkränze angeordneten Verzahnung in Verbindung mit den mit ebenfalls einer Verzahnung versehenen Segmenten des Statorblechpakets, wird ein elektromagnetischer Antrieb bereitgestellt, der über ein verhältnismäßig hohes Drehmoment verfügt. Aufgrund des hohen Drehmomentes können βeschleunigungswerte erreicht werden, die bei bestimmten Webmaschinen ausreichend sind, um eine solche Dreherkantenvorrichtung, wie sie Gegenstand der Erfindung ist, der jeweiligen Fachöffnung bzw. dem Fachschluss vorauseilen zu lassen. Das heißt, dass mit der Vorrichtung ein trapezförmiger Geschwindigkeitsverlauf bereitgestellt werden kann, bei dem die Flanken verhältnismäßig steil verlaufen, ganz ähnlich wie dies bei dem zuvor abgehandelten Propellerdreher der Fall ist. Es ist insofern auch keine Lageregelung erforderlich, wie dies nach dem Stand der Technik beispielsweise gemäß der DE 197 33 261 C2 der Fall ist. Es ist vielmehr völlig ausreichend, wenn der Motor zur Fachöffnung bzw. zum Fachschluss entsprechende Steuersignale erhält. Das heißt, der elektromagnetische Antrieb gemäß der Erfindung dreht sich nicht kontinuierlich synchron zu den Webschäften, vielmehr "flippt" er, was bedeutet, dass er, wenn er ein Signal zur Fachöffnung erhält, in die entsprechende Stellung übergeht, als dann wartet, bis er ein entsprechendes Signal zum Fachschluss erhält.

Vorteilhafte Merkmale und Ausgestaltungen zu der Erfindung ergeben sich aus den Unteransprüchen.

So ist insbesondere vorgesehen, dass das Gehäuse zweischalig ausgebildet ist und eine Halterung zur Anordnung an einer Webmaschine aufweist, sodass die Vorrichtung einfach zu montieren ist und durch die Halterung in der Schnittgasse der Webmaschine zu Erzeugung einer Dreherkante angebaut werden kann. Vorteilhaft sind zwei mit geringem Abstand zueinanderstehende Vorrichtungen der eingangs genannten Art in der Schnittgasse angeordnet, um zu jeder Seite des Gewebes eine Dreherkante auszuführen. Der Abstand der beiden Vorrichtungen zueinander ist erforderlich, um Raum für die Durchführung der Dreherfäden bereitzustellen.

Um die Rotierbarkeit des Trägers als Bestandteil des Rotors zu gewährleisten, steht der Träger mit dem Innenring des Lagers in Verbindung, wobei der Außenring des Lagers in dem Gehäuse gelagert ist.

Nach einem weiteren vorteilhaften Merkmal der Erfindung ist vorgesehen, dass die Zähne der Verzahnung des einen Zahnkranzes um eine halbe Zahnteilung in Umfangsrichtung versetzt zu der Verzahnung des anderen Zahnkranzes stehen. Hierdurch wird erreicht, dass immer ein Zahn einer der beiden Verzahnungen der Zahnkränze mit den Zähnen der Verzahnung der Segmente zusammenwirkt. Insbesondere auch in Verbindung mit einer besonders kleinteiligen Anordnung der Zähne der Zahnkränze als auch auf der Verzahnung des Segmentes wird ein hohes Drehmoment erreicht. So ist insbesondere vorgesehen, dass der Abstand zweier Zähne sowohl der Verzahnung der Zahnkränze als auch der Verzahnung der Segmente etwa 1,5 bis 2,0 mm beträgt. Grundsätzlich gilt, dass die Teilung der Verzahnung auf den Zahnkränzen und den Segmenten im Wesentlichen gleich ist. Das heißt, die Zahnteilung der Verzahnung der Zahnkränze und die der Segmente müssen nicht zwingend exakt gleich sein, vielmehr ist sogar von Vorteil eine ganz geringe Abweichung von nur einigen wenigen Zähnen (1 oder 2) weniger oder mehr vorzusehen. Damit wird das Rastmoment und mithin die Welligkeit des Drehmomentes vermindert, was einem Mikroschrittbetrieb entgegenkommt. Durch einen Mikroschrittbetrieb kann die Leistungsfähigkeit des Antriebs weiter gesteigert werden.

Im Hinblick auf die Anordnung der Magnete sind zwei Varianten vorstellbar. Nach einer ersten Ausführungsform ist vorstellbar, dass die Mehrzahl der Magnete mindestens einen Magnetring bildet. Gegenüber einer Mehrzahl von einzelnen Magneten, die einzeln beabstandet zueinander auf dem Träger angeordnet sind, hat ein durchgehender Magnetring aus Magneten den Vorteil, dass der elektromagnetische Antrieb über ein höheres Drehmoment verfügt und demzufolge auch über eine höhere Beschleunigung, als dies bei der Verwendung einzelner beabstandeter Magnete der Fall ist. Im Einzelnen ist in diesem Zusammenhang vorgesehen, dass die Magnete zwischen den beiden Zahnkränzen mit den Zahnkränzen in Verbindung stehend angeordnet sind. Entsprechendes gilt, wenn die einzelnen Magnete als Magnetring ausgebildet sind. Hierbei ist die Ausrichtung von Nord- und Südpol axial. Dies hat den Vorteil, dass die beiden Zahnkränze durch die Magnete gehalten werden und somit als Einheit montierbar sind.

Eine zweite Ausführungsform zeichnet sich dadurch aus, dass jedem Zahnkranz ein gesonderter Magnetring zugeordnet ist, wobei der Zahnkranz auf dem entsprechenden Magnetring lagert. Der Vorteil dieser zweiten Ausführungsform gegenüber der ersten Ausführungsform, bei der die Magnete bzw. der Magnetring zwischen den beiden Kränzen angeordnet ist, besteht darin, dass hier der Magnetfluss unmittelbar radial ausgerichtet ist. Bei der ersten Ausführungsform ist es so, dass der Magnetfluss aus axialer Richtung in radiale Richtung umgelenkt wird, was schlussendlich mit geringen Drehrnornentverlusten verbunden ist. Das heißt, dass die zweite Ausführungsform, bei der jedem Zahnkranz ein Magnetring zugeordnet ist, über ein höheres Drehmoment verfügt. Bei dieser zweiten Ausführungsform ist entsprechend vorgesehen, dass die Ausrichtung von Nord- und Südpol radial ist.

Die Erfindung betrifft auch eine Projektilwebmaschine mit mindestens einer Schnittgasse zur Teilung der Gewebebahn, die sich erfindungsgemäß dadurch auszeichnet, dass in der Schnittgasse mindestens eine vorzugsweise zwei Vorrichtungen gemäß einem oder mehrerer der Ansprüche 1 bis 11 angeordnet sind. Hierbei kann der Kettbaum durchgängig ausgebildet sein.
Anhand der Zeichnungen wird die Erfindung nachstehend beispielhaft näher erläutert.
- Fig. 1: zeigt zwei elektromagnetisch arbeitende Vorrichtungen zum Bilden einer Dreherkante mit angedeutetem Gewebe in einer perspektivischen Darstellung;
- Fig. 2: zeigt die erfindungsgemäße Vorrichtung zum Bilden einer Dreherkante in einer Explosionsdarstellung (erste Ausführungsform);
- Fig. 3: zeigt einen Halbschnitt durch die erfindungsgemäße Vorrichtung zum Bilden einer Dreherkante gemäß Fig. 2;
- Fig. 4: zeigt eine zweite Ausführungsform zu Fig. 3, wobei jedem Zahnkranz unmittelbar ein Magnetkranz zugeordnet ist.

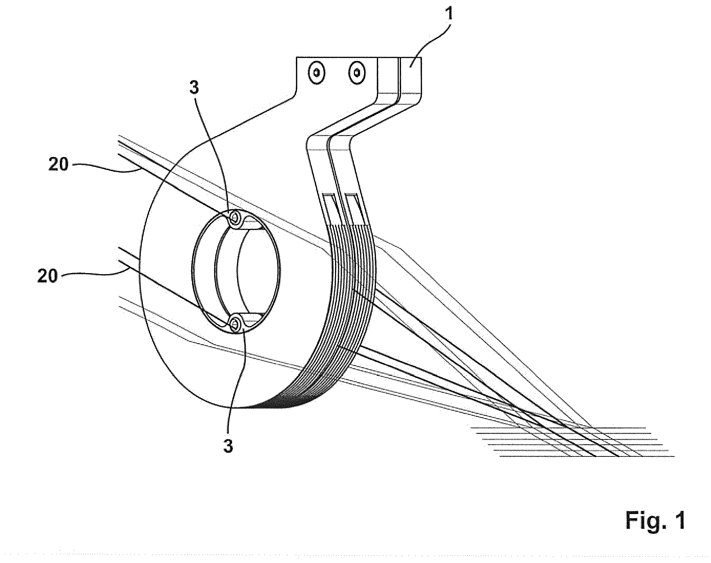

Gemäß Fig. 1 sind zwei Vorrichtungen 1 zum Bilden jeweils einer Dreherkante gezeigt, wobei zwischen den beiden Vorrichtungen ein geringfügiger Abstand vorgesehen ist, um die Dreherfäden 20, die durch die Fadenösen 3 geführt sind, in Richtung des Kettbaumes zu führen.

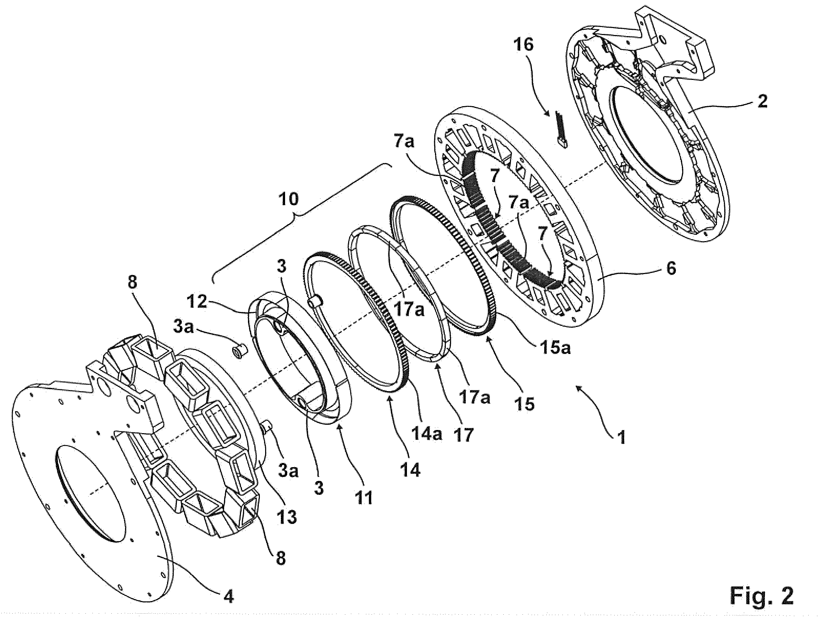

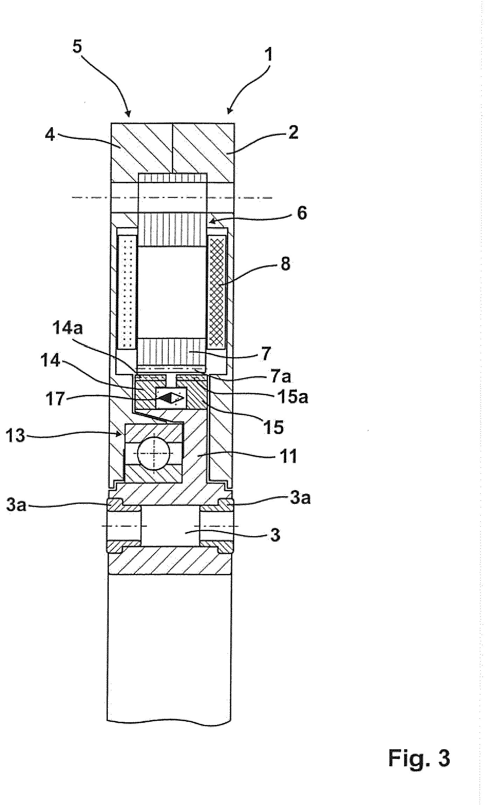

Gegenstand der Erfindung ist nun in der ersten Ausführungsform die Ausbildung der elektromagnetisch arbeitenden Vorrichtung zum Bilden einer Dreherkante gemäß der Fig. 2 und 3. Die in Fig. 2 in Form einer Explosionszeichnung dargestellte Vorrichtung 1 zum Bilden einer Dreherkante umfasst die beiden Gehäuseschalen 2, 4, wobei durch die beiden Gehäuseschalen 2, 4 ein Statorblechpaket 6 aufnehmbar ist, das die Mehrzahl an Spulen 8 trägt, wie dies bei Elektromotoren bekannt ist. Der insgesamt mit 10 bezeichnete Rotor umfasst den Träger 11, der auf der Innenseite einander gegenüberliegend die beiden Fadenösen 3 aufweist, die mit Einsätzen 3a zur Verminderung des Verschleißes durch die durch die Fadenösen 3 geführten Dreherfäden versehen ist. Der Träger 11 als Teil des Rotors 10 weist des Weiteren eine Nut 12 auf, die der Aufnahme des insgesamt mit 13 bezeichneten Wälzlagers dient. Mit dem Wälzlager 13 ist der Träger 11 in dem durch die Gehäuseschalen 2, 4 gebildeten Gehäuse 5 drehbar gelagert. Auf dem Umfang des Trägers 11 lagern die beiden Zahnkränze 14, 15, wobei die Zahnkränze die radial nach außen gerichtete Verzahnung 14a, 15a aufweisen, wie sich dies unmittelbar in Anschauung der Fig. 2 ergibt. Zwischen den beiden Zahnkränzen 14, 15 befindet sich der mit 17 bezeichnete Magnetring, umfassend einzelne Magnete 17a. Der Rotor 10 umfasst somit den Träger 11, den Magnetring 17, die Zahnkränze 14, 15 sowie gegebenenfalls das Wälzlager 13. Des Weiteren ist ein Hallsensor 16 vorgesehen. Der Hallsensor 16 dient allerdings nicht zur kontinuierlichen Erfassung des Drehwinkels für eine Lageregelung, sondern ausschließlich zur Erfassung einer einzigen fixen, sogenannten Referenzposition. Diese wird nur genau einmal direkt nach dem Einschalten der Stromversorgung angefahren, um einen definierten Drehwinkel zu erhalten. Im weiteren Betrieb bis zum nächsten Einschalten wird dieser Hallsensor 16 nicht mehr benötigt. Der Drehwinkel im Betrieb wird dann durch eine Steuerung errechnet durch Addition bzw. Subtraktion der einzelnen Schritte je nach Drehrichtung.

Ein Schnitt durch die in Fig. 2 gezeigte Vorrichtung ergibt sich in Anschauung von Fig. 3.

Das Statorblechpaket 6 weist auf dem Innenumfang im Bereich einer jeden Spule 8 ein Segment 7 mit einer Verzahnung 7a auf, wobei die Verzahnung 7a auf dem Segment 7, mit der Verzahnung 14a, 15a auf dem jeweiligen Zahnkranz 14, 15 in Bezug auf die Zahnteilung identisch ist. Die seitliche Erstreckung der Segmente 7 ist hierbei derart, dass die Verzahnung 14a, 15a beider Zahnkränze 14, 15 abgedeckt ist.

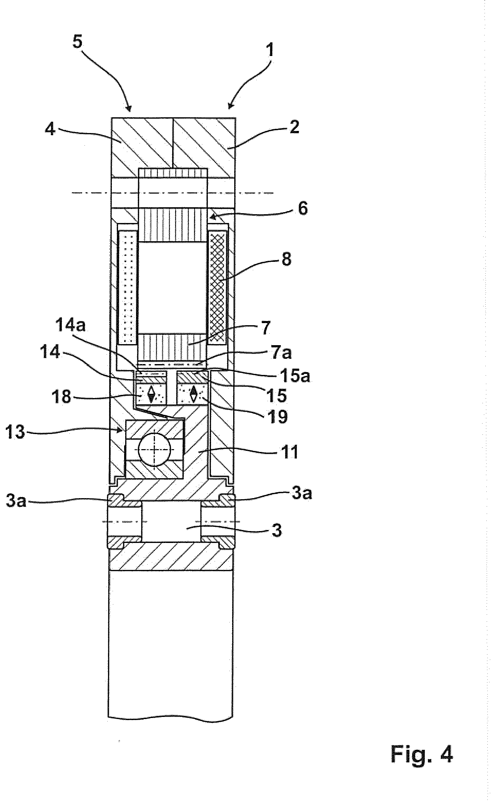

Fig. 4 zeigt eine weitere Variante zu der Ausführungsform des elektromagnetischen Antriebes gemäß den Fig. 2 und 3. Dies insofern, als der Träger 11, der aus magnetisierbarem Material, beispielsweise Weicheisen ausgebildet ist, auf seinem Umfang zwei Magnetringe 18, 19 aufweist, wobei auf den Magnetringen 18, 19 der entsprechende Zahnkranz 14, 15 angeordnet ist. Bei der Ausführungsform gemäß der Fig. 3 ist der dort dargestellte Magnetring 17 in Bezug auf die Polung axial ausgerichtet, wohingegen bei den Magnetringen 18, 19 die Ausrichtung radial ist. Eine Umpolung muss hierbei also nicht mehr stattfinden, was, wie bereits ausgeführt, zu einem erhöhten Drehmoment eines solchen Motors gegenüber einem Motor gemäß der Darstellung gemäß Fig. 3 führt.

### Bezugszeichenliste:

- 1: Vorrichtung zum Bilden einer Dreherkante
- 2: Gehäuseschale
- 3: Fadenöse
- 3a: Einsatz
- 4: Gehäuseschale
- 5: Gehäuse (bestehend aus den beiden Gehäuseschalen)
- 6: Statorblechpaket
- 7: Segment
- 7a: Verzahnung auf Segment
- 8: Spule
- 10: Rotor
- 11: Träger
- 12: Nut
- 13: Wälzlager
- 14: Zahnkranz
- 14a: Verzahnung
- 15: Zahnkranz
- 15a: Verzahnung
- 16: Hallsensor
- 17: Magnetring
- 17a: Magnete
- 18: Magnetring
- 19: Magnetring
- 20: Dreherfäden

## Patentansprüche

1. Vorrichtung zum Bilden einer Dreherkante (1), insbesondere für eine Webmaschine, umfassend ein feststehendes Gehäuse (5) und ein im Gehäuse (5) durch ein Lager (13) drehbar gelagerten kreisring- oder kreisscheibenförmigen Träger (11), **dadurch gekennzeichnet, dass** der Träger (11) auf dem Außenumfang mindestens zwei parallel zueinander verlaufende Zahnkränze (14, 15) aus magnetisierbarem Material aufweist, wobei im Bereich des Innenrings des Lagers (13) der Träger (11) zwei diagonal gegenüberliegende Fadenösen (3) zur Führung von Dreherfäden (20) aufweist, wobei im Bereich der Zahnkränze (14, 15) eine Mehrzahl von Magneten (17a) umfangsverteilt auf dem Außenumfang des Trägers (11) angeordnet sind, wobei das Gehäuse (5) den beiden Zahnkränzen (14, 15) zugeordnet ein kreisringförmiges Statorblechpaket (6) mit einer Mehrzahl von daran angeordneten Spulen (8) aufweist, wobei das Statorblechpaket (6) im Bereich der Spulen (8) Segmente (7) mit jeweils einer der Verzahnung (14a, 15a) der Zahnkränze zugeordneten Verzahnung (7a) aufweist.

2. Vorrichtung zum Bilden einer Dreherkante (1), insbesondere für eine Webmaschine, nach Anspruch 1,
**dadurch gekennzeichnet,**
**dass** das Gehäuse (5) zweischalig ausgebildet ist und eine Halterung zur Anordnung an einer Webmaschine aufweist.

3. Vorrichtung zum Bilden einer Dreherkante (1), insbesondere für eine Webmaschine, nach einem der voranstehenden Ansprüche,
**dadurch gekennzeichnet,**
**dass** der Träger (11) mit dem Innenring des Lagers (13) in Verbindung steht, wobei der Außenring des Lagers (13) in dem Gehäuse (5) gelagert ist.

4. Vorrichtung zum Bilden einer Dreherkante (1), insbesondere für eine Webmaschine, nach einem der voranstehenden Ansprüche,
**dadurch gekennzeichnet,**
**dass** die Zähne der Verzahnung (14a) des einen Zahnkranzes (14) um eine halbe Zahnteilung versetzt zu den Zähnen der Verzahnung (15a) des anderen Zahnkranzes (15) auf dem Träger (11) angeordnet sind.

5. Vorrichtung zum Bilden einer Dreherkante (1), insbesondere für eine Webmaschine, nach einem der voranstehenden Ansprüche,
**dadurch gekennzeichnet,**
**dass** die Mehrzahl an Magneten (17a) mindestens einen Magnetring (17) bilden.

6. Vorrichtung zum Bilden einer Dreherkante (1), insbesondere für eine Webmaschine, nach Anspruch 5,
**dadurch gekennzeichnet,**
**dass** die Magnete (17a) zwischen den beiden Zahnkränzen (14,15) mit den Zahnkränzen (14, 15) in Verbindung stehend angeordnet sind.

7. Vorrichtung zum Bilden einer Dreherkante (1), insbesondere für eine Webmaschine, nach Anspruch 5,
**dadurch gekennzeichnet,**
**dass** die Ausrichtung der Magnete (17a) von Nord- und Südpol axial ist.

8. Vorrichtung zum Bilden einer Dreherkante (1), insbesondere für eine Webmaschine, nach einem der voranstehenden Ansprüche,
**dadurch gekennzeichnet,**
**dass** jedem Zahnkranz (14, 15) ein Magnetring (18,19) zugeordnet ist, wobei der Zahnkranz (14, 15) auf dem entsprechenden Magnetring (18, 19) lagert.

9. Vorrichtung zum Bilden einer Dreherkante (1), insbesondere für eine Webmaschine, nach Anspruch 8,
**dadurch gekennzeichnet,**
**dass** die Ausrichtung von Nord- und Südpol des Magnetringes (18, 19) radial ist.

10. Vorrichtung zum Bilden einer Dreherkante (1), insbesondere für eine Webmaschine, nach einem der voranstehenden Ansprüche,
**dadurch gekennzeichnet,**
**dass** die Teilung der Verzahnung (14a, 15a) der Zahnkränze (14,15) und die Teilung der Verzahnung (7a) der Segmente (7) im Wesentlichen gleich ist.

11. Vorrichtung zum Bilden einer Dreherkante (1), insbesondere für eine Webmaschine, nach einem der voranstehenden Ansprüche,
**dadurch gekennzeichnet,**
**dass** das Lager (13) als Wälzlager ausgebildet ist.

12. Projektilwebmaschine mit mindestens einer Schnittgasse zur Teilung der Gewebebahn
**gekennzeichnet durch**
mindestens eine in der Schnittgasse angeordnete Vorrichtung (1) gemäß einem oder mehrerer der Ansprüche 1 bis 11.

13. Projektilwebmaschine nach Anspruch 11,
**dadurch gekennzeichnet,**
**dass** der Kettbaum der Projektilwebmaschine durchgängig ausgebildet ist.

## Claims

1. A device for forming a leno selvedge (1), in particular for a weaving machine, comprising a stationary housing (5) and a support (11) having the shape of a circular ring or circular disc rotatably supported in the housing (5) by a bearing (13),
**characterized in that**
the support (11) comprises at least two ring gears (14, 15) of magnetizable material extending parallel with one another arranged on the outer circumference, the support (11) comprising two diagonally oppositely disposed thread eyelets (3) for guiding leno threads (20) in the region of the inner race of the bearing (13), a plurality of magnets (17a) being distributed on the outer circumference of the support (11) in the region of the ring gears (14, 15), the housing (5) comprising a stator sheet package (6) of circular ring shape, associated with the two ring gears (14, 15), with a plurality of coils (8) arranged thereon, the stator sheet package (6) comprising segments (7) in the region of the coils (8) with respectively one toothed arrangement (7a) associated with the toothed arrangement (14a, 15a) of the ring gears.

2. The device for forming a leno selvedge (1), in particular for a weaving machine, according to claim 1,
**characterized in that**
the housing (5) is formed of two shells and comprises a holder for its arrangement at a loom.

3. The device for forming a leno selvedge (1), in particular for a weaving machine, according to one of the afore-mentioned claims,
**characterized in that**
the support (11) is connected to the inner race of the bearing (13), wherein the outer race of the bearing (13) is supported by the housing (5).

4. The device for forming a leno selvedge (1), in particular for a weaving machine, according to one of the afore-mentioned claims,
**characterized in that**
the teeth of the toothed arrangement (14a) of one of the ring gears (14) are arranged offset by half a tooth pitch with respect to the teeth of the toothed arrangement (15a) of the other ring gear (15) on the support (11).

5. The device for forming a leno selvedge (1), in particular for a weaving machine, according to one of the afore-mentioned claims,
**characterized in that**
the plurality of magnets (17a) form at least one magnet ring (17).

6. The device for forming a leno selvedge (1), in particular for a weaving machine, according to claim 5,
**characterized in that**
the magnets (17a) are arranged between the two ring gears (14, 15) in such a manner that they connect with the ring gears (14,15).

7. The device for forming a leno selvedge (1), in particular for a weaving machine, according to claim 5,
**characterized in that**
the alignment of the magnets (17a) from the north pole to the south pole is axial.

8. The device for forming a leno selvedge (1), in particular for a weaving machine, according to one of the afore-mentioned claims,
**characterized in that**
a magnet ring (18, 19) is associated with each ring gear (14, 15), with the ring gear (14, 15) being supported on the corresponding magnet ring (18, 19).

9. The device for forming a leno selvedge (1), in particular for a weaving machine, according to claim 8,
**characterized in that**
the alignment of the magnet ring (18, 19) from the north pole to the south pole is radial.

10. The device for forming a leno selvedge (1), in particular for a weaving machine, according to one of the afore-mentioned claims,
**characterized in that**
the pitch of the toothed arrangement (14a, 15a) of the two ring gears (14, 15) and the pitch of the toothed arrangement (7a) of the segments (7) is substantially the same.

11. The device for forming a leno selvedge (1), in particular for a weaving machine, according to one of the afore-mentioned claims,
**characterized in that**
the bearing (13) is formed as a rolling bearing.

12. A projectile weaving machine having at least one cutting lane for dividing a fabric web,
**characterized by**
at least one device (1) according to one or several of the claims 1 to 11 arranged in the cutting lane.

13. The projectile weaving machine according to claim 11,
**characterized in that**
the warp beam of the projectile weaving machine is continuous.

## Revendications

1. Dispositif de formation d'une lisière à pas de gaze (1), en particulier pour un métier à tisser, comportant un bâti stationnaire (5) et un support (11) en forme d'anneau circulaire ou de disque circulaire monté de manière rotative dans le bâti (5) sur un palier (13),
**caractérisé en ce que**
le support (11) comporte au moins deux roues dentées (14, 15) en matériau magnétisable disposés parallèlement l'un à l'autre sur la circonférence extérieure, le support (11) comportant, dans la région de l'anneau intérieur du palier (13), deux oeillets (3) pour le fil disposés de manière diagonalement opposée pour guider les fils de tour (20), une pluralité d'aimants (17a) étant distribués sur la circonférence extérieure du support (11) dans la région des roues dentées (14, 15), le bâti (5) comportant un empilage de tôles de stator (6) en forme d'anneau circulaire associé aux deux roues dentées (14, 15) avec une pluralité de bobines (8) disposées sur celui-ci, où l'empilage de tôles de stator (6) comporte dans la région des bobines (8) des segments (7) avec respectivement une dentelure (7a) associée à la dentelure (14a, 15a) des roues dentées.

2. Dispositif de formation d'une lisière à pas de gaze (1), en particulier pour un métier à tisser, selon la revendication 1,
**caractérisé en ce que**
le bâti (5) est formé par deux coques et comporte un dispositif de fixation pour son agencement au niveau d'un métier à tisser.

3. Dispositif de formation d'une lisière à pas de gaze (1), en particulier pour un métier à tisser, selon l'une des revendications précédentes,
**caractérisé en ce que**
le support (11) est relié à l'anneau intérieur du palier (13), l'anneau extérieur du palier (13) étant monté dans le bâti (5).

4. Dispositif de formation d'une lisière à pas de gaze (1), en particulier pour un métier à tisser, selon l'une des revendications précédentes,
**caractérisé en ce que**
les dents de la dentelure (14a) de l'une des roues dentées (14) sont disposées sur le support (11) avec un décalage d'un demi pas par rapport aux dents de la dentelure (15a) de l'autre roue dentée (15).

5. Dispositif de formation d'une lisière à pas de gaze (1), en particulier pour un métier à tisser, selon l'une des revendications précédentes,
**caractérisé en ce que**
la pluralité d'aimants (17a) forment au moins un anneau magnétique (17).

6. Dispositif de formation d'une lisière à pas de gaze (1), en particulier pour un métier à tisser, selon la revendication 5,
**caractérisé en ce que**
les aimants (17a) sont disposés entre les deux roues dentées (14, 15) de telle manière qu'ils sont reliés aux roues dentées (14, 15).

7. Dispositif de formation d'une lisière à pas de gaze (1), en particulier pour un métier à tisser, selon la revendication 5,
**caractérisé en ce que**
l'orientation des aimants (17a) du pôle Nord au pôle Sud est axiale.

8. Dispositif de formation d'une lisière à pas de gaze (1), en particulier pour un métier à tisser, selon l'une des revendications précédentes,
**caractérisé en ce que**
un anneau magnétique (18, 19) est associé à chaque roue dentée (14, 15), la roue dentée (14, 15) étant montée sur l'anneau magnétique (18, 19) correspondant.

9. Dispositif de formation d'une lisière à pas de gaze (1), en particulier pour un métier à tisser, selon la revendication 8,
**caractérisé en ce que**
l'orientation de l'anneau magnétique (18, 19) du pôle Nord au pôle Sud est radiale.

10. Dispositif de formation d'une lisière à pas de gaze (1), en particulier pour un métier à tisser, selon l'une des revendications précédentes,
**caractérisé en ce que**
le pas de la dentelure (14a, 15a) des roues dentées (14, 15) et le pas de la dentelure (7a) des segments (7) sont substantiellement égaux.

11. Dispositif de formation d'une lisière à pas de gaze (1), en particulier pour un métier à tisser, selon l'une des revendications précédentes,
**caractérisé en ce que**
le palier (13) prend la forme d'un palier à rouleau.

12. Métier à tisser à projectiles avec au moins un couloir de coupe pour la division de la bande de tissu,
**caractérisé par**
au moins un dispositif (1) selon une ou plusieurs des revendications 1 à 11 disposé dans le couloir de coupe.

13. Métier à tisser à projectiles selon la revendication 11,
**caractérisé en ce que**
l'ensouple du métier à tisser à projectiles est continu.
